# EUROPEAN PATENT APPLICATION

(11) **EP 4 557 433 A1**
(43) Date of publication of application: **21.05.2025**
(21) Application number: 23875237.2
(22) Date of filing: 05.10.2023
(51) Int. Cl.: H01M 10/0567, H01M 10/052

(54) **LITHIUM METAL BATTERY**

(30) Priority: 05.10.2022 KR 20220126772
(71) Applicant: LG Chem, Ltd., Yeongdeungpo-gu Seoul 07336 (KR)
(72) Inventor: KIM, Ki Cheol, Daejeon 34122 (KR); SHIN, Sung Ho, Daejeon 34122 (KR); YOON, Jeong Ae, Daejeon 34122 (KR); OH, Mi Yeon, Daejeon 34122 (KR); LEE, Won Kyun, Daejeon 34122 (KR); KIM, Jae Yoon, Daejeon 34122 (KR)
(74) Representative: Hoffmann Eitle
(86) International application number: PCT/KR2023/015345
(87) International publication number: WO 2024/076175

(57) **Abstract**

The present invention relates to a lithium metal battery having improved lifespan and improved stability, and to a lithium metal battery comprising: a positive electrode; a lithium metal negative electrode; a separator disposed between the positive electrode and the lithium metal negative electrode; and a nonaqueous electrolyte solution containing an organic solvent, a lithium salt, and a compound represented by chemical formula I as described in the present specification.

## Description

### TECHNICAL FIELD

### Cross-reference to Related Applications

This application claims priority from Korean Patent Application No. 10-2022-0126772, filed on October 5, 2022, the disclosure of which is incorporated by reference herein.

### Technical Field

The present invention relates to a lithium metal battery which includes a non-aqueous electrolyte solution including a silane-based compound.

### BACKGROUND ART

Recently, interests in energy storage technologies have been increasingly grown, and there emerges an interest in rechargeable secondary batteries among electrochemical devices. Particularly, lithium secondary batteries developed in the early 1990's are spotlighted because the lithium secondary batteries are advantageous in that they have higher operating voltage and significantly higher energy density. A lithium secondary battery is composed of a negative electrode including a negative electrode active material, such as a carbon material or silicon material, capable of intercalating and deintercalating lithium ions, a positive electrode including a positive electrode active material such as a lithium-containing oxide, and a non-aqueous electrolyte solution in which a lithium salt is dissolved in an organic solvent.

A lithium metal battery is a battery which uses a lithium metal or lithium alloy as the negative electrode in the lithium secondary battery, wherein, since lithium has a high specific capacity of about 3,860 mAh/g, a very low standard redox potential (-3.04 V vs SHE), and low density (0.534 g/cm³), it is known as the most suitable material to replace the negative electrode including the negative electrode active material such as the carbon material or silicon material.

With respect to the lithium metal battery, a solid electrolyte interface (SEI) layer, which is composed of a decomposition product formed by a chemical reaction with the electrolyte solution, is formed on a surface of the lithium metal negative electrode, wherein, since local electrodeposition of lithium additionally occurs, lithium dendrites are formed while the lithium grows into dendrites (tree-like form), and, as a result, there is a problem in that an internal short circuit of the battery occurs. In addition, since the non-uniform electrodeposition of the lithium may generate dead lithium to damage the previously formed SEI layer, the surface of the lithium metal negative electrode accordingly may be exposed to cause chain decomposition of the electrolyte solution, and, as a result, there are problems in that capacity, stability, and life performance of the battery are degraded and resistance of the battery is increased.

### DISCLOSURE OF THE INVENTION

### TECHNICAL PROBLEM

An aspect of the present invention provides a lithium metal battery having improved life characteristics.

### TECHNICAL SOLUTION

(1) The present invention provides a lithium metal battery including: a positive electrode; a lithium metal negative electrode; a separator disposed between the positive electrode and the lithium metal negative electrode; and a non-aqueous electrolyte solution including an organic solvent, a lithium salt, and a compound represented by Formula I. 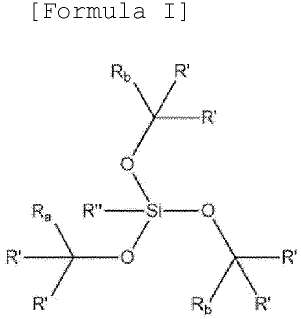 In Formula I,
   Rₐ is a C₁-C₁₀ alkyl group substituted with at least one fluorine element,
   R_{b} is each independently a C₁-C₁₀ alkyl group unsubstituted or substituted with at least one fluorine element,
   R' is each independently hydrogen; an unsubstituted or substituted C₁-C₁₀ alkyl group; or an unsubstituted or substituted C₁-C₁₀ heteroalkyl group, and
   R" is an unsubstituted or substituted C₂-C₁₀ alkenyl group; or an unsubstituted or substituted C₂-C₁₀ alkynyl group.
(2) The present invention provides the lithium metal battery of (1) above, wherein the non-aqueous electrolyte solution further includes at least one selected from compounds represented by Formula II to Formula V.

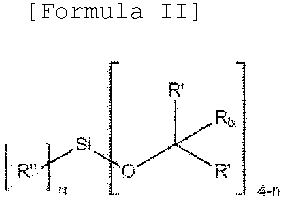

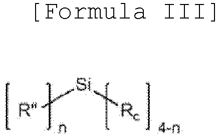

   [Formula IV] Si(R")₄

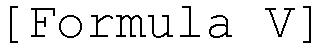

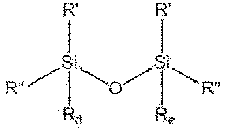

   In Formula II to Formula V,
   R_{b} is each independently a C₁-C₁₀ alkyl group unsubstituted or substituted with at least one fluorine element,
   R_{c} is each independently an unsubstituted or substituted C₁-C₁₀ alkyl group,
   R' is each independently hydrogen; an unsubstituted or substituted C₁-C₁₀ alkyl group; or an unsubstituted or substituted C₁-C₁₀ heteroalkyl group,
   R" is an unsubstituted or substituted C₂-C₁₀ alkenyl group; or an unsubstituted or substituted C₂-C₁₀ alkynyl group,
   R_{d} and Rₑ are each independently hydrogen; an unsubstituted or substituted C₁-C₁₀ alkyl group; an unsubstituted or substituted C₁-C₁₀ heteroalkyl group; or an unsubstituted or substituted siloxane group,
   wherein, in a case in which both R_{d} and Rₑ are siloxane groups, R_{d} and Rₑ may be connected to each other to form a ring composed of a siloxane bond, and
   n is 2 or 3.
(3) The present invention provides the lithium metal battery of (2) above, wherein the compound represented by Formula I is at least one compound selected from compounds of Formulae I-a to I-f. 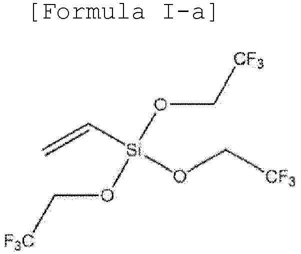 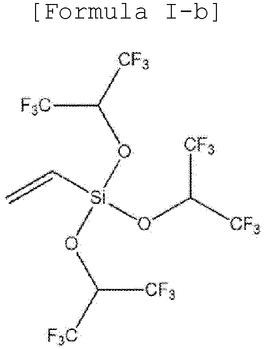 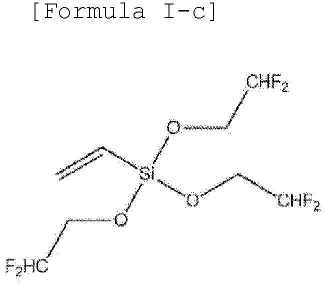 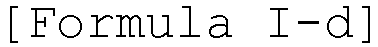 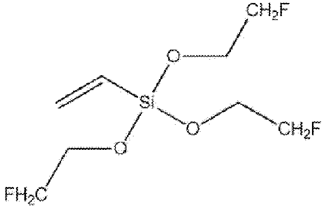 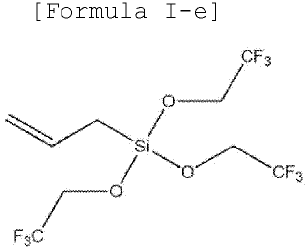 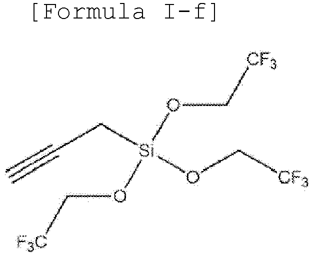
(4) The present invention provides the lithium metal battery of (2) or (3) above, wherein the compound represented by Formula II is at least one compound selected from compounds of Formulae II-a to II-f. 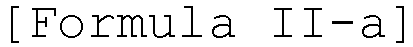 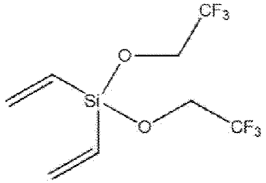 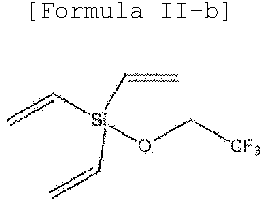 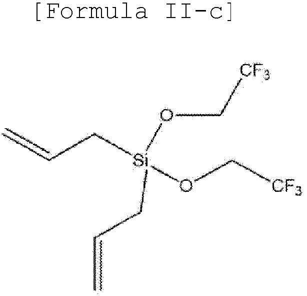 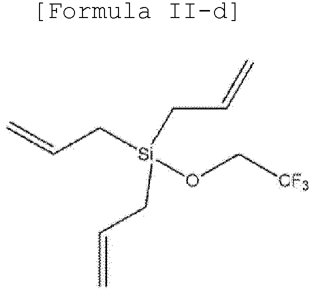 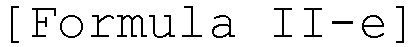 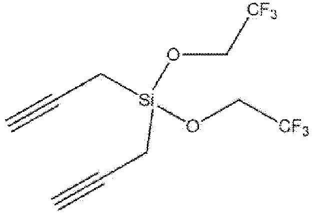 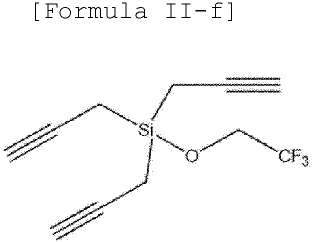
(5) The present invention provides the lithium metal battery of any one of (2) to (4) above, wherein the compound represented by Formula III is at least one compound selected from compounds of Formulae III-a to III-o. 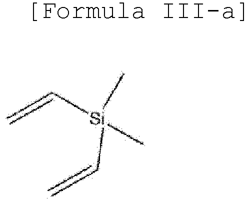 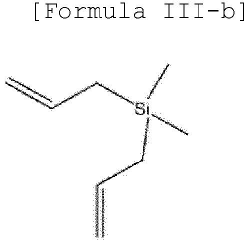 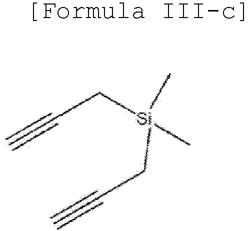 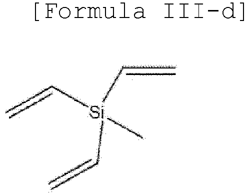 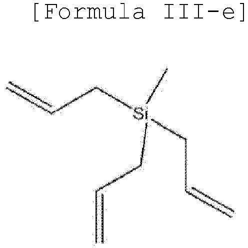 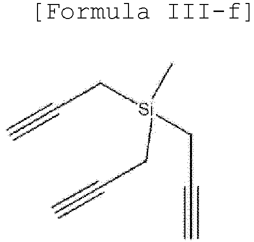 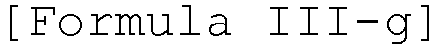 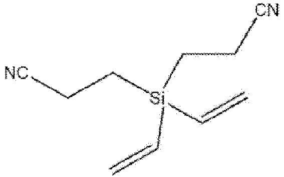 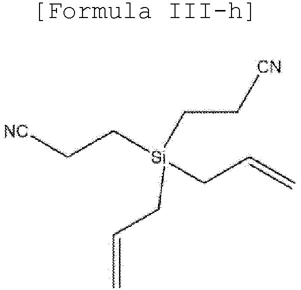 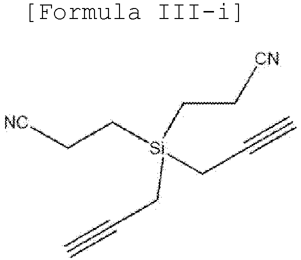 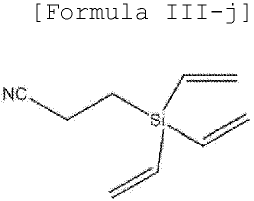 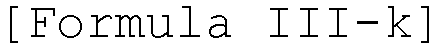 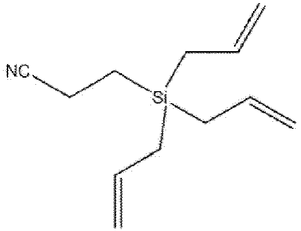 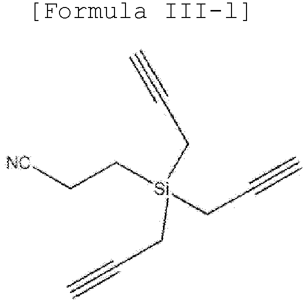 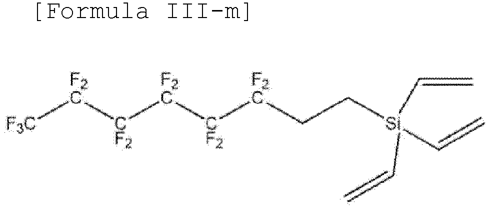 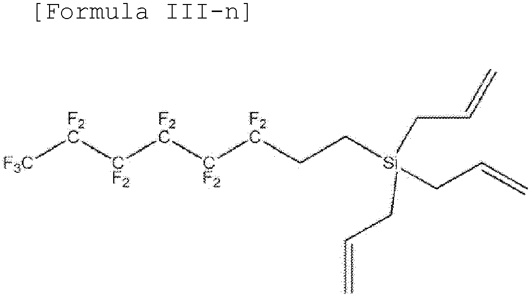 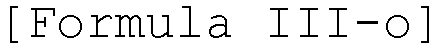 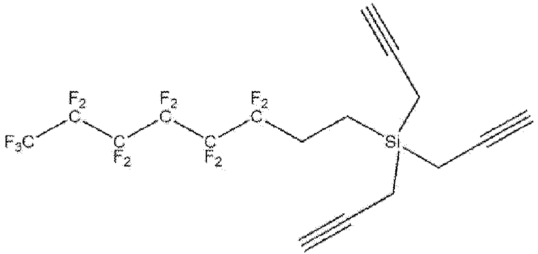
(6) The present invention provides the lithium metal battery of any one of (2) to (5) above, wherein the compound represented by Formula IV is at least one compound selected from compounds of Formulae IV-a to IV-c. 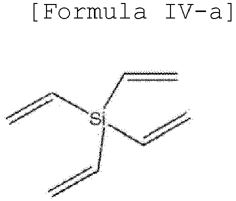 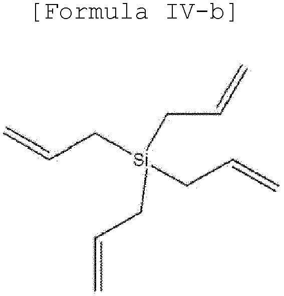 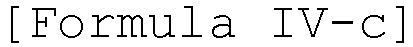 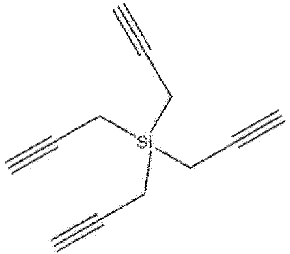
(7) The present invention provides the lithium metal battery of any one of (2) to (6) above, wherein the compound represented by Formula V is at least one compound selected from compounds of Formulae V-a and V-b.

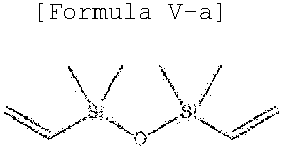

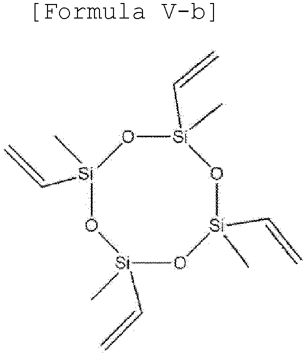

### ADVANTAGEOUS EFFECTS

In a case in which the compound represented by Formula I, as a silane-based compound, is included in a non-aqueous electrolyte solution as in the present invention, since a solid electrolyte interface (SEI) layer with high structural flexibility and stability is formed on a lithium metal negative electrode through a chemical reaction including an electrochemical reaction and a physical force (adhesion) is also generated between the SEI layer and the lithium metal negative electrode, a lithium metal battery with excellent stability and life characteristics may be provided.

### MODE FOR CARRYING OUT THE INVENTION

Hereinafter, the present invention will be described in more detail.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing specific embodiments only and is not intended to be limiting of the present invention. In the specification, the terms of a singular form may include plural forms unless referred to the contrary. In the present invention, it will be further understood that the terms 'include,' or 'have' when used in this specification, specify the presence of stated features, numbers, steps, elements, or combinations thereof, but do not preclude the presence or addition of one or more other features, numbers, steps, elements, or combinations thereof.

The present invention provides a lithium metal battery including: a positive electrode; a lithium metal negative electrode; a separator disposed between the positive electrode and the lithium metal negative electrode; and a non-aqueous electrolyte solution including an organic solvent, a lithium salt, and a compound represented by Formula I.

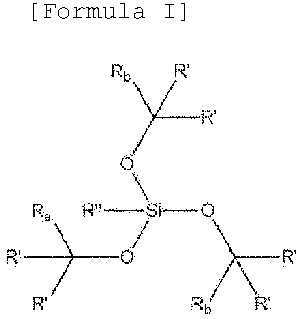

In Formula I,
Rₐ is a C₁-C₁₀ alkyl group substituted with at least one fluorine element,
R_{b} is each independently a C₁-C₁₀ alkyl group unsubstituted or substituted with at least one fluorine element,
R' is each independently hydrogen; an unsubstituted or substituted C₁-C₁₀ alkyl group; or an unsubstituted or substituted C₁-C₁₀ heteroalkyl group, and
R" is an unsubstituted or substituted C₂-C₁₀ alkenyl group; or an unsubstituted or substituted C₂-C₁₀ alkynyl group.

In the present invention, with respect to a substituted alkyl group; a substituted heteroalkyl group; a substituted alkenyl group; a substituted alkynyl group; or a substituted siloxane group, a substituent may be deuterium (-D), a hydroxy group (-OH), an amino group (-NR₂), a halogen group (-X), a thiol group (-SR), a cyano group (-CN), a carbonyl group (-C(=O)-H, -C(=O)-R, -C(=O)-OH, -C(=O)-NR₂, -C(=O)-OR, -C(=O)-X), a carbamate group (-O-C(=O)-NR₂, -NR-C(=O)OR), a urea group (-N(R)-C(=O)-NR₂), a carbonate group (-O-C(=O)-OR), an anhydride group (-C(=O)-O-C(=O)-R), an ester group (-O-C(=O)-R), a cyanate group (-OCN), an isocyanate group (-NCO), a thiocyanate group (-SCN), a nitrate group (-O-N(=O)-OR), a sulfonyl group (-S(=O)₂-R), a sulfinyl group (-S(=O)-R), phosphite (-OP(OR)₂), phosphate (-OPO(OR)₂), phosphinate (-PO(OR)R), phosphinite (-P(OR)R₂), phosphonate (-PO₃R₂), phosphonite (-P(OR)₂), boronic acid (-B(OR)₂), borate (-O-B(OR)₂), borane (-BR₂), a siloxane group (-Si-O-Si-R), a silane group (-SiR₄), or a linear or branched C₁-C₆ alkoxy group. In this case, in the above substituents, X is a halogen group, and R may each independently be a C₁-C₁₀ alkyl group; a C₂-C₁₀ alkenyl group; or a C₂-C₁₀ alkynyl group.

The inventors of the present invention have found that, in a case in which the compound represented by Formula I is included in the non-aqueous electrolyte solution of the lithium metal battery, since a hydroxyl group on a surface of the negative electrode or positive electrode (a hydroxyl group of LiOH present on the surface of the lithium metal negative electrode; with respect to the positive electrode, a hydroxyl group present on a surface of a positive electrode active material (ex. lithium metal oxide)) and the compound represented by Formula I form a covalent bond ([electrode]-O-Si-O-), a solid electrolyte interface (SEI) layer, which is not significantly affected by volume changes, that is, with excellent mechanical stiffness is formed. Specifically, the inventors of the present invention have found that, in a case in which the negative electrode is the lithium metal negative electrode, since a Li-Si-O network is formed between the negative electrode and an additive and an -O-Si-O-Si-O- network is formed between the SEI layer and the additive, the lithium metal negative electrode, which has a stability problem due to formation of lithium dendrites during charge and discharge, may be protected.

Since the Li-Si-O network between the negative electrode and the additive has a function of promoting movement of Li⁺ at an interface between the negative electrode and the electrolyte solution, an increase in resistance in the battery may be inhibited and battery performance may not be degraded even when the battery is rapidly charged.

Also, since the compound represented by Formula I contains a fluorine element, it becomes a source of fluorine anions during a reduction/oxidation decomposition reaction, and thus, it helps to form LiF, a stable inorganic compound included in the SEI layer. Furthermore, since the compound represented by Formula I contains an unsubstituted or substituted alkenyl group; or an unsubstituted or substituted alkynyl group, it may form an SEI layer in the form of a polymer by forming a C-C bond through the reduction/oxidation decomposition reaction.

As a result, although the battery according to the present invention is a lithium metal battery, it is characterized in that high-temperature stability and life characteristics are excellent due to the formation of the SEI layer with high structural flexibility and stability.

### (1) Positive Electrode

The positive electrode may be prepared by coating a positive electrode collector with a slurry for a positive electrode which includes a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, microscopic irregularities may be formed on its surface to improve bonding strength with the positive electrode active material, and the positive electrode collector may be used in various shapes such as that of a film, a sheet, a foil, a net, a porous body, a foam body, a non-woven fabric body, and the like.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the lithium metal oxide may be LiCoO₂, LiMnO₂, LiNiO₂, lithium nickel manganese cobalt oxide (e.g., Li(Ni_{1/3}Mn_{1/3}CO_{1/3})O₂, Li(Ni_{0.6}Mn_{0.2}CO_{0.2})O₂, Li(Ni_{0.5}Mn_{0.3}CO_{0.2})O₂, Li(Ni_{0.7}Mn_{0.15}Co_{0.15})O₂, and Li(Ni_{0.8}Mn_{0.1}Co_{0.1})O₂, etc.), or lithium nickel cobalt aluminum oxide (e.g., LiNi_{0.8}Co_{0.15}Al_{0.05}O₂, etc.), and, in consideration of a significant improvement effect due to the control of types and content ratios of components constituting the lithium composite metal oxide, the lithium composite metal oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on a total weight of solid content excluding the solvent in the slurry for a positive electrode.

The binder is a component that assists in the binding between the active material and the conductive agent and in the binding with the current collector.

Examples of the binder may be polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene (PE), polypropylene, an ethylene-propylene-diene monomer, a sulfonated ethylene-propylene-diene monomer, a styrenebutadiene rubber, a fluoro rubber, or various copolymers.

The binder may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The conductive agent is a component for further improving conductivity of the positive electrode active material.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, or thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, preferably 70 wt% to 95 wt%, and more preferably 70 wt% to 90 wt%.

### (2) Lithium Metal Negative Electrode

The negative electrode is a lithium metal negative electrode, wherein the negative electrode may be a lithium thin film itself or may be prepared by a method in which lithium is physically bonded, extruded, rolled, or deposited on a negative electrode collector. As the deposition method, an electrical deposition method or a chemical vapor deposition method for metal may be used.

In a case in which the negative electrode is prepared by physically bonding, rolling, or depositing lithium on the negative electrode collector, the negative electrode collector generally has a thickness of 3 µm to 500 µm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength, and the negative electrode collector may be used in various shapes such as a film, a sheet, a foil, a net, a porous body, a foam body, a non-woven fabric body, and the like.

### (3) Separator

Also, a conventional porous polymer film typically used as a separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

### (4) Non-aqueous Electrolyte Solution

The non-aqueous electrolyte solution according to the present invention includes an organic solvent, a lithium salt, and a compound represented by Formula I.

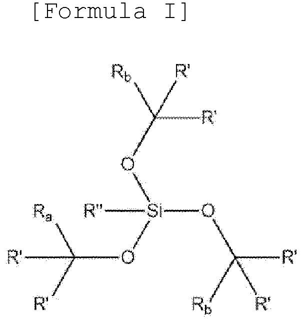

In Formula I,
Rₐ is a C₁-C₁₀ alkyl group substituted with at least one fluorine element,
R_{b} is each independently a C₁-C₁₀ alkyl group unsubstituted or substituted with at least one fluorine element,
R' is each independently hydrogen; an unsubstituted or substituted C₁-C₁₀ alkyl group; or an unsubstituted or substituted C₁-C₁₀ heteroalkyl group, and
R" is an unsubstituted or substituted C₂-C₁₀ alkenyl group; or an unsubstituted or substituted C₂-C₁₀ alkynyl group.

According to the present invention, the non-aqueous electrolyte solution may further include at least one selected from compounds represented by Formula II to Formula V.

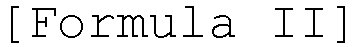

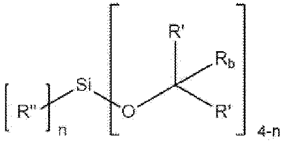

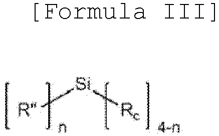

[Formula IV] Si(R")₄

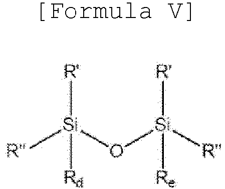

In Formula II to Formula V,
R_{b} is each independently a C₁-C₁₀ alkyl group unsubstituted or substituted with at least one fluorine element,
R_{c} is each independently an unsubstituted or substituted C₁-C₁₀ alkyl group,
R' is each independently hydrogen; an unsubstituted or substituted C₁-C₁₀ alkyl group; or an unsubstituted or substituted C₁-C₁₀ heteroalkyl group,
R" is an unsubstituted or substituted C₂-C₁₀ alkenyl group; or an unsubstituted or substituted C₂-C₁₀ alkynyl group,
R_{d} and Rₑ are each independently hydrogen; an unsubstituted or substituted C₁-C₁₀ alkyl group; an unsubstituted or substituted C₁-C₁₀ heteroalkyl group; or an unsubstituted or substituted siloxane group,
wherein, in a case in which both R_{d} and Rₑ are siloxane groups, R_{d} and Rₑ may be connected to each other to form a ring composed of a siloxane bond, and
n is 2 or 3.

The non-aqueous electrolyte solution according to the present invention may include the compound represented by Formula I; and at least one selected from the compounds represented by Formula II to Formula V. That is, the non-aqueous electrolyte solution according to the present invention simultaneously includes the compounds represented by Formula I and Formula II, simultaneously includes the compounds represented by Formula I and Formula III, simultaneously includes the compounds represented by Formula I and Formula IV, simultaneously includes the compounds represented by Formula I and Formula V, simultaneously includes the compounds represented by Formula I, Formula II, and Formula III, simultaneously includes the compounds represented by Formula I, Formula II, and Formula IV, simultaneously includes the compounds represented by Formula I, Formula II, and Formula V, simultaneously includes the compounds represented by Formula I, Formula III, and Formula IV, simultaneously includes the compounds represented by Formula I, Formula III, and Formula V, simultaneously includes the compounds represented by Formulae I to IV, simultaneously includes the compounds represented by Formula I, Formula II, Formula III, and Formula V, simultaneously includes the compounds represented by Formula I, Formula II, Formula IV, and Formula V, or may simultaneously include the compounds represented by Formula I, Formula III, Formula IV, and Formula V.

In a case in which the compound represented by Formula I; and the at least one selected from the compounds represented by Formulae II to V are simultaneously included in the non-aqueous electrolyte solution, since a thin and stable SEI layer is formed, a lithium secondary battery with excellent high-temperature stability and life characteristics may be provided. Particularly, in a case in which a lithium metal negative electrode is used as a negative electrode of the lithium secondary battery, since a thin and stable SEI layer containing not only a siloxane bond but also a carbon-carbon bond is formed, the high-temperature stability and life characteristics of the battery may be further improved.

### 1) Compound Represented by Formula I

The compound represented by Formula I may form an SEI layer with excellent mechanical stiffness by forming a covalent bond ([electrode]-O-Si-O-) with a hydroxyl group on the surface of the negative electrode or positive electrode (a hydroxyl group of LiOH present on the surface of the lithium metal negative electrode; with respect to the positive electrode, a hydroxyl group present on the surface of the positive electrode active material (ex. lithium metal oxide)). Specifically, in a case in which the negative electrode is the lithium metal negative electrode, since a Li-Si-O network is formed between the negative electrode and the additive and an -O-Si-O-Si-O-network is formed between the SEI layer and the additive, the lithium metal negative electrode, which has a stability problem due to the formation of lithium dendrites during charge and discharge, may be protected. Since the Li-Si-O network between the negative electrode and the additive has the function of promoting the movement of Li⁺ at the interface between the negative electrode and the electrolyte solution, the increase in resistance in the battery may be inhibited and the battery performance may not be degraded even when the battery is rapidly charged.

Also, since the compound represented by Formula I contains a fluorine element, it becomes a source of fluorine anions during the reduction/oxidation decomposition reaction, and thus, it helps to form LiF, a stable inorganic compound included in the SEI layer. Furthermore, since the compound represented by Formula I contains an unsubstituted or substituted alkenyl group; or an unsubstituted or substituted alkynyl group, it may form an SEI layer in the form of a polymer by forming a C-C bond through the reduction/oxidation decomposition reaction.

As a result, although the battery according to the present invention is a lithium metal battery, it is characterized in that high-temperature stability and life characteristics are excellent due to the formation of the SEI layer with high structural flexibility and stability.

In Formula I, Rₐ may specifically be a C₁-C₆ alkyl group substituted with at least one fluorine element, more specifically, a C₁-C₅ alkyl group substituted with at least one fluorine element. In this case, since more abundant fluorine atoms may be supplied, formation of a more stable SEI layer of LiF component may be expected.

In Formula I, R_{b} may specifically each independently be a C₁-C₁₀ alkyl group substituted with at least one fluorine element, more specifically, a C₁-C₆ alkyl group substituted with at least one fluorine element, and may more specifically each independently be a C₁-C₅ alkyl group substituted with at least one fluorine element. In this case, since it becomes the source of fluorine anions during the reduction/oxidation decomposition reaction, a stable LiF-based SEI layer may be formed. Thus, in the lithium metal battery using the non-aqueous electrolyte solution including the compound represented by Formula I, lifetime of the electrode is improved, and battery swelling caused by electrolyte decomposition at high temperatures may be effectively reduced.

In Formula I, R' may specifically each independently be hydrogen; or an unsubstituted or substituted C₁-C₁₀ alkyl group, more specifically, hydrogen; or a substituted C₁-C₆ alkyl group, and may more specifically each independently be hydrogen; or a substituted C₁-C₅ alkyl group. In this case, a substituent may specifically be a fluoro group.

In Formula I, R" may specifically be an unsubstituted C₂-C₁₀ alkenyl group; or an unsubstituted C₂-C₁₀ alkynyl group, more specifically, an unsubstituted C₂-C₆ alkenyl group; or an unsubstituted C₂-C₆ alkynyl group, and may more specifically be an unsubstituted C₂-C₅ alkenyl group; or an unsubstituted C₂-C₅ alkynyl group. In this case, an unsaturated carbon bond may form an SEI layer in the form of a polymer through the reduction/oxidation decomposition reaction at an interface between the two electrodes.

According to the present invention, the compound represented by Formula I may be at least one compound selected from compounds of Formulae I-a to I-f below.

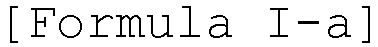

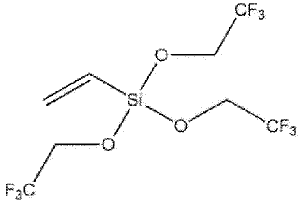

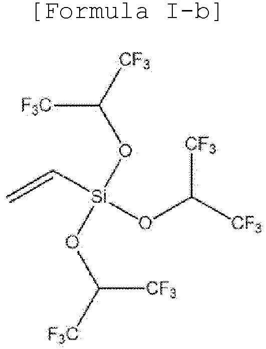

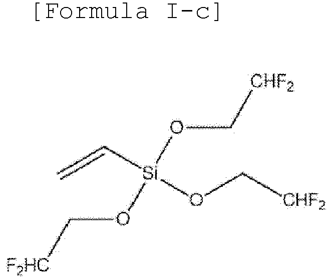

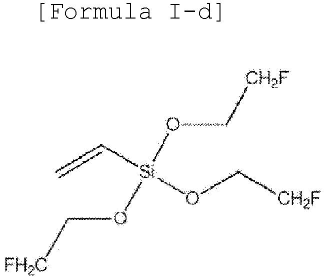

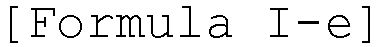

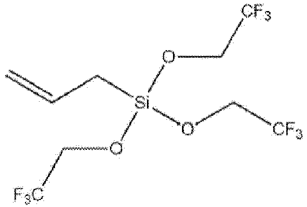

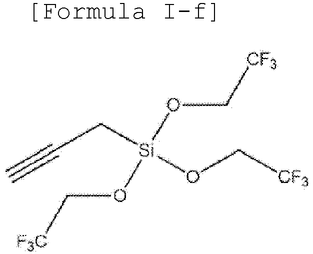

According to the present invention, the non-aqueous electrolyte solution may include the compound represented by Formula I in an amount of 0.01 part by weight to 10 parts by weight, specifically, 0.01 part by weight to 5 parts by weight, 0.01 part by weight to 1 part by weight, or 0.1 part by weight to 1 part by weight based on 100 parts by weight of the non-aqueous electrolyte solution. In a case in which the amount of the compound represented by Formula I is within the above range, when the non-aqueous electrolyte solution is used in a lithium metal battery, since the SEI layer, which is derived from the compound represented by Formula I, has an appropriate thickness so as to facilitate the movement of lithium ions and has high mechanical stiffness, stability may be improved and a reduction in capacity of the battery may be inhibited by inhibiting an increase in internal resistance of the lithium metal battery.

The compound represented by Formula I may be prepared through a reaction of substituting a halogen element of a silane compound containing silicon (Si) directly bonded to the halogen element with alcohol, but the present invention is not limited thereto, and the compound represented by Formula I may be prepared through a known method. For example, as described in Organometallics, 2011, vol.30. #2, p.352 ~ 355, the compound represented by Formula I may also be prepared by a method of introducing an alkyne into a silane compound represented by SiH(OR)₃ in the presence of a transition metal catalyst.

### 2) Compound Represented by Formula II

Since the compound represented by Formula II includes two or more unsubstituted or substituted alkenyl groups; or unsubstituted or substituted alkynyl group, it may efficiently help to form an SEI layer as a crosslinker, and as a result, a more robust SEI layer may be formed. Through the formation of such a stable SEI layer, it plays a role in extending lifetime of the electrode or effectively reducing the swelling of the battery which is caused by the electrolyte decomposition.

Additionally, since the compound represented by Formula II becomes the source of fluorine anions during the reduction/oxidation decomposition reaction by including the fluorine element, it plays a role in assisting the formation of LiF, a stable inorganic compound included in the SEI layer.

According to the present invention, in Formula II, R_{b} may specifically each independently be a C₁-C₁₀ alkyl group substituted with at least one fluorine element, more specifically, a C₁-C₆ alkyl group substituted with at least one fluorine element, and may more specifically each independently be a C₁-C₅ alkyl group substituted with at least one fluorine element. For example, R_{b} may be a C₁-C₅ alkyl group containing a trifluoro group.

According to the present invention, in Formula II, R' may specifically each independently be hydrogen; or an unsubstituted C₁-C₁₀ alkyl group, more specifically, hydrogen; or an unsubstituted C₁-C₆ alkyl group, and may more specifically each independently be hydrogen; or an unsubstituted C₁-C₅ alkyl group.

According to the present invention, in Formula II, R" may specifically be an unsubstituted C₂-C₁₀ alkenyl group; or an unsubstituted C₂-C₁₀ alkynyl group, more specifically, an unsubstituted C₂-C₆ alkenyl group; or an unsubstituted C₂-C₆ alkynyl group, and may more specifically be an unsubstituted C₂-C₅ alkenyl group; or an unsubstituted C₂-C₅ alkynyl group.

According to the present invention, the compound represented by Formula II may be at least one compound selected from compounds of Formulae II-a to II-f below.

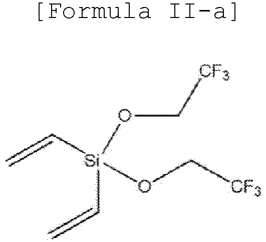

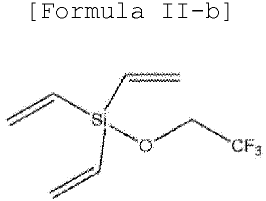

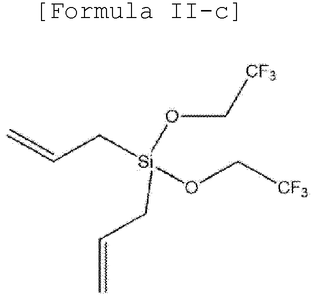

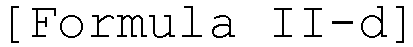

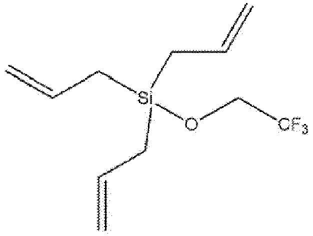

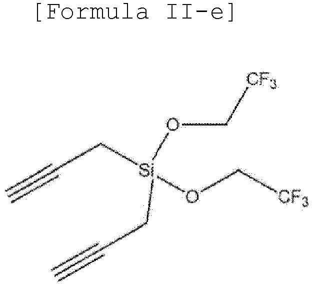

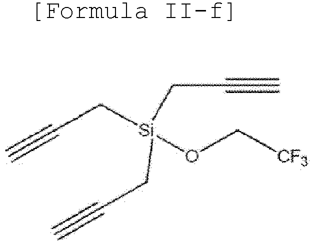

### 3) Compound Represented by Formula III

Since the compound represented by Formula III includes two or more unsubstituted or substituted alkenyl groups; or unsubstituted or substituted alkynyl group, it may efficiently help to form an SEI layer as a crosslinker, and as a result, a more robust SEI layer may be formed. Through the formation of such a stable SEI layer, it plays a role in extending the lifetime of the electrode or effectively reducing the swelling of the battery which is caused by the electrolyte decomposition.

According to the present invention, in Formula III, R_{c} may specifically each independently be an unsubstituted C₁-C₁₀ alkyl group; a C₁-C₁₀ alkyl group substituted with at least one fluorine element; or a C₁-C₁₀ alkyl group substituted with a cyano group. R_{c} may more specifically each independently be an unsubstituted C₁-C₆ alkyl group; a C₁-C₁₀ alkyl group substituted with at least one fluorine element; or a C₁-C₆ alkyl group substituted with a cyano group.

According to the present invention, in Formula III, R" may specifically be an unsubstituted C₂-C₁₀ alkenyl group; or an unsubstituted C₂-C₁₀ alkynyl group, more specifically, an unsubstituted C₂-C₆ alkenyl group; or an unsubstituted C₂-C₆ alkynyl group, and may more specifically be an unsubstituted C₂-C₅ alkenyl group; or an unsubstituted C₂-C₅ alkynyl group.

According to the present invention, the compound represented by Formula III may be at least one compound selected from compounds of Formulae III-a to III-o below.

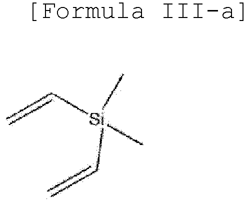

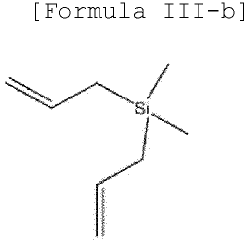

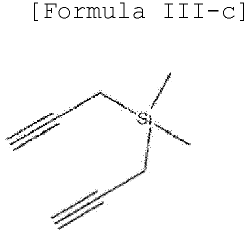

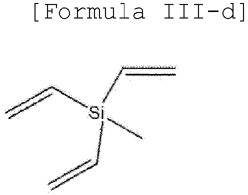

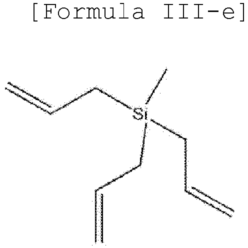

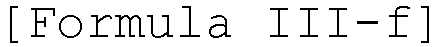

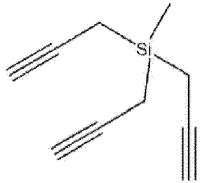

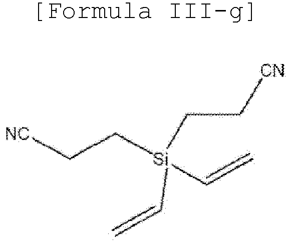

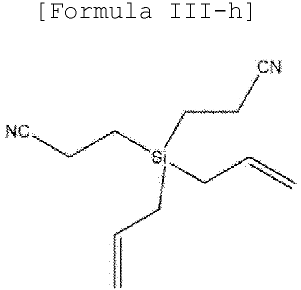

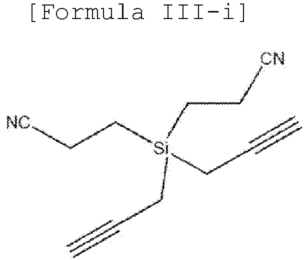

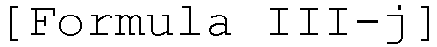

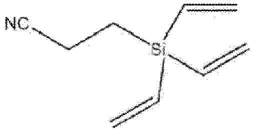

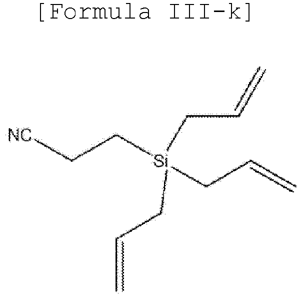

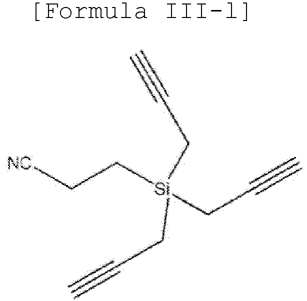

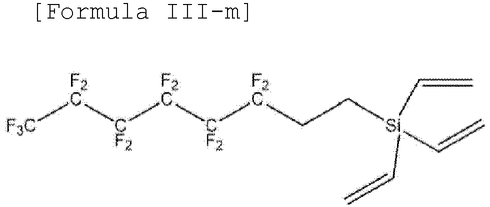

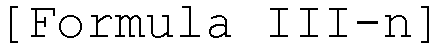

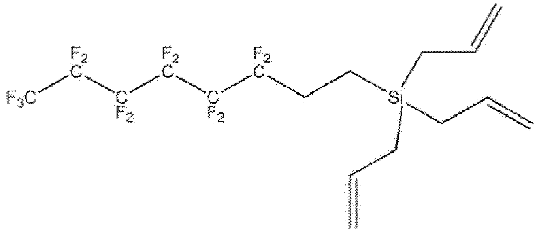

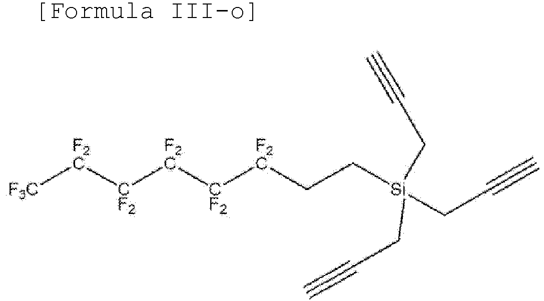

### 4) Compound Represented by Formula IV

Since the compound represented by Formula IV includes two or more unsubstituted or substituted alkenyl groups; or unsubstituted or substituted alkynyl group, it may efficiently help to form an SEI layer as a crosslinker, and as a result, a more robust SEI layer may be formed. Through the formation of such a stable SEI layer, it plays a role in extending the lifetime of the electrode or effectively reducing the swelling of the battery which is caused by the electrolyte decomposition.

According to the present invention, in Formula IV, R" may specifically be an unsubstituted C₂-C₁₀ alkenyl group; or an unsubstituted C₂-C₁₀ alkynyl group, more specifically, an unsubstituted C₂-C₆ alkenyl group; or an unsubstituted C₂-C₆ alkynyl group, and may more specifically be an unsubstituted C₂-C₅ alkenyl group; or an unsubstituted C₂-C₅ alkynyl group.

According to the present invention, the compound represented by Formula IV may be at least one compound selected from compounds of Formulae IV-a to IV-c below.

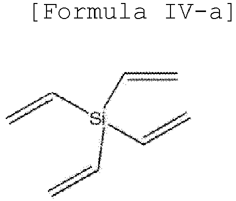

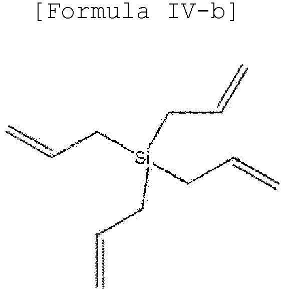

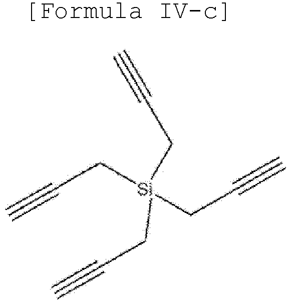

### 5) Compound Represented by Formula V

Since the compound represented by Formula V includes two or more unsubstituted or substituted alkenyl groups; or unsubstituted or substituted alkynyl group, it may efficiently help to form an SEI layer as a crosslinker, and as a result, a more robust SEI layer may be formed. Through the formation of such a stable SEI layer, it plays a role in extending the lifetime of the electrode or effectively reducing the swelling of the battery which is caused by the electrolyte decomposition.

According to the present invention, in Formula V, R' may specifically each independently be hydrogen; or an unsubstituted C₁-C₁₀ alkyl group, more specifically, hydrogen; or an unsubstituted C₁-C₆ alkyl group, and may more specifically each independently be hydrogen; or an unsubstituted C₁-C₅ alkyl group.

According to the present invention, in Formula V, R" may specifically be an unsubstituted C₂-C₁₀ alkenyl group; or an unsubstituted C₂-C₁₀ alkynyl group, more specifically, an unsubstituted C₂-C₆ alkenyl group; or an unsubstituted C₂-C₆ alkynyl group, and may more specifically be an unsubstituted C₂-C₅ alkenyl group; or an unsubstituted C₂-C₅ alkynyl group.

According to the present invention, in Formula V, R_{d} and Rₑ may specifically each independently be hydrogen; an unsubstituted C₁-C₁₀ alkyl group; a siloxane group and/or a siloxane group substituted with a silane group; or an unsubstituted siloxane group, more specifically, hydrogen; an unsubstituted C₁-C₆ alkyl group; a siloxane group and/or a siloxane group substituted with a silane group; or an unsubstituted siloxane group, and may more specifically each independently be hydrogen; an unsubstituted C₁-C₅ alkyl group; a siloxane group and/or a siloxane group substituted with a silane group; or an unsubstituted siloxane group. In a case in which both R_{d} and Rₑ are siloxane groups, R_{d} and Rₑ may be connected to each other to form a ring composed of a siloxane bond.

According to the present invention, the compound represented by Formula V may be at least one compound selected from compounds of Formulae V-a and V-b below.

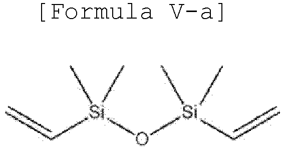

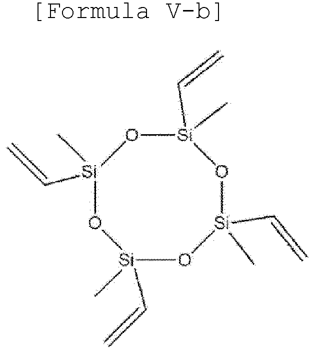

In the case that the compound represented by Formula I; and the at least one selected from the compounds represented by Formula II to Formula V are simultaneously included in the non-aqueous electrolyte solution, a weight ratio (A:B) of the compound (A) represented by Formula I to the at least one (B) selected from the compounds represented by Formula II to Formula V may be in a range of 1:1 to 100:1, particularly 1:1 to 50:1, 1:1 to 40:1, 1:1 to 30:1, 1:1 to 20:1, or 1:1 to 10:1, and more particularly 1:1 to 9:1, 1:1 to 8:1, 1:1 to 7:1, 1:1 to 6:1, 1:1 to 5:1, 1:1 to 4:1, 1:1 to 3:1, or 1:1 to 2:1. In this case, since the compound represented by Formula I is present more abundantly than the compounds represented by Formula II to Formula V which act as the crosslinker, a crosslink may be efficiently formed, and thus, an SEI layer with high mechanical stiffness may be formed to improve battery stability. In this case, the non-aqueous electrolyte solution may include the compound represented by Formula I in an amount of 0.01 part by weight to 10 parts by weight, specifically, 0.01 part by weight to 5 parts by weight, 0.01 part by weight to 1 part by weight, or 0.1 part by weight to 1 part by weight based on 100 parts by weight of the non-aqueous electrolyte solution. Also, the non-aqueous electrolyte solution may include the at least one selected from the compounds represented by Formula II to Formula V in an amount of 0.01 part by weight to 10 parts by weight, specifically, 0.01 part by weight to 5 parts by weight, 0.01 part by weight to 2.5 parts by weight, or 0.1 part by weight to 0.5 part by weight based on 100 parts by weight of the non-aqueous electrolyte solution. In this case, when the non-aqueous electrolyte solution is used in a lithium metal battery, since the SEI layer, which is derived from the compound represented by Formula I; and the at least one selected from the compounds represented by Formula II and Formula V, has an appropriate thickness so as to facilitate the movement of lithium ions and has high mechanical stiffness, stability may be improved and a reduction in capacity of the battery may be inhibited by inhibiting an increase in internal resistance of the lithium metal battery.

### 6) Organic Solvent

The organic solvent is a non-aqueous solvent commonly used in a lithium metal battery, wherein the organic solvent is not limited as long as decomposition due to an oxidation reaction during charge and discharge of the lithium metal battery may be minimized and desired properties may be exhibited together with the compounds represented by Formulae I to V.

The organic solvent, for example, may be linear carbonate or cyclic carbonate, linear ester or cyclic ester, ether, glyme, or nitrile (acetonitrile, SN, etc.), but is not limited thereto. A carbonate-based electrolyte solution solvent containing a carbonate compound, such as cyclic carbonate, linear carbonate, or a mixture thereof, may be typically used as the organic solvent.

Specific examples of the cyclic carbonate compound are ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC), but the cyclic carbonate compound is not limited thereto.

Specific examples of the linear carbonate compound are dimethyl carbonate (DMC), diethyl carbonate (DEC), dipropyl carbonate, ethylmethyl carbonate (EMC), methylpropyl carbonate, and ethylpropyl carbonate, but the linear carbonate compound is not limited thereto.

Specific examples of the linear ester compound are methyl acetate, ethyl acetate, propyl acetate, methyl propionate, ethyl propionate, propyl propionate, and butyl propionate, but the linear ester compound is not limited thereto.

Specific examples of the cyclic ester compound are γ-butyrolactone, γ-valerolactone, γ-caprolactone, σ-valerolactone, and ε-caprolactone, but the cyclic ester compound is not limited thereto.

Specific examples of the ether-based solvent are dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL), but the ether-based solvent is not limited thereto.

The glyme-based solvent is a solvent having higher permittivity and lower surface tension than the linear carbonate-based organic solvent as well as less reactivity with metal, wherein the glyme-based solvent is dimethoxyethane (glyme, DME), diethoxyethane, diglyme, tri-glyme (Triglyme), and tetra-glyme (TEGDME), but is not limited thereto.

Specific examples of the nitrile-based solvent are acetonitrile, propionitrile, butyronitrile, valeronitrile, caprylontrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, or 4-fluorophenylacetonitrile, but the nitrile-based solvent is not limited thereto.

Since ethylene carbonate and propylene carbonate, as the cyclic carbonate-based organic solvents, well dissociate the lithium salt in the electrolyte solution due to high permittivity as a highly viscous organic solvent, the ethylene carbonate and propylene carbonate may be preferably used, and, since an electrolyte solution having high electrical conductivity may be prepared when the above cyclic carbonate is mixed with the low viscosity, low permittivity linear carbonate, such as dimethyl carbonate, diethyl carbonate, or ethylmethyl carbonate, in an appropriate ratio, the cyclic carbonate may be more preferably used. In this case, the cyclic carbonate and the linear carbonate may be mixed and used in a volume ratio of 2:8 to 4:6.

### 7) Lithium Salt

The lithium salt is used as an electrolyte salt in a lithium metal battery, wherein it is used as a medium for transferring ions. Typically, the lithium salt may include at least one compound selected from LiPF₆, LiBF₄, LiSbF₆, LiAsF₆, LiClO₄, LiN(C₂F₅SO₂)₂, LiN(CF₃SO₂)₂, CF₃SO₃Li, LiC(CF₃SO₂)₃, LiC₄BO₈, LiTFSI, LiFSI, and LiClO₄, and may preferably include LiPF₆, but is not limited thereto. The lithium salt may be used alone or in a mixture of two or more thereof, if necessary.

According to the present invention, the lithium salt may be included in a concentration of 0.5 M to 5 M, and may preferably be included in a concentration of 0.5 M to 4 M in the non-aqueous electrolyte solution. In a case in which the concentration of the lithium salt is within the above range, since a concentration of lithium ions in the electrolyte solution is appropriate, the battery may be properly charged and discharged and wetting in the battery is excellent due to appropriate viscosity of the electrolyte solution so that battery performance may be improved.

### 8) Other Electrolyte Additives

The non-aqueous electrolyte solution may further include other electrolyte additives.

The other electrolyte additives are known electrolyte additives that may be additionally added to the non-aqueous electrolyte solution of the present invention, wherein the other electrolyte additives, for example, may be vinylene carbonate, vinyl ethylene carbonate, catechol carbonate, α-bromo-γ-butyrolactone, methyl chloroformate, succinimide, N-benzyloxycarbonyloxysuccinimide, N-hydroxysuccinimide, N-chlorosuccinimide, methyl cinnamate, 1,3,5-tricyanobenzene, tetracyanoquinodimethane, pyrocarbonate, cyclohexylbenzene, propane sultone, succinonitrile, adiponitrile, ethylene sulfate, propene sultone, fluoroethylene carbonate, LiPO₂F₂, LiODFB (Lithium difluorooxalatoborate), LiBOB (Lithium bis-(oxalato)borate), TMSPa (3-trimethoxysilanyl-propyl-N-aniline), TMSPi (Tris(trimethylsilyl)Phosphite), 12-crown-4, 15-crown-5, 18-crown-6, aza-ethers, boranes, borates, boronates, ferrocene and its derivatives, or LiBF₄.

The other electrolyte additives may be included in an amount of 0.01 part by weight to 10 parts by weight, preferably 0.05 part by weight to 7.0 parts by weight, and more preferably 0.05 part by weight to 5.0 parts by weight based on 100 parts by weight of the non-aqueous electrolyte solution.

The lithium metal battery of the present invention may be prepared according to a typical method known in the art. For example, after an electrode assembly, in which the separator is disposed between the positive electrode and the negative electrode, is formed, the electrode assembly is inserted into a battery case, and the lithium secondary battery may be prepared by injecting the non-aqueous electrolyte solution according to the present invention.

A shape of the lithium metal battery of the present invention is not particularly limited, but a cylindrical type using a can, a prismatic type, a pouch type, or a coin type may be used.

According to the present invention, a battery module including the lithium metal battery as a unit cell and a battery pack including the battery module may be provided. Since the battery module and the battery pack include the lithium metal battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention, and such modifications and alterations fall within the scope of claims included herein.

### Synthesis Examples

### Synthesis Example 1. Preparation of the Compound of Formula I-a

After adding 3.5 equivalents of 2,2,2-trifluoroethanol to a two-neck round-bottom flask, a dropping funnel and a reflux condenser were connected, the round-bottom flask was placed in an oil bath and then heated to 50°C, and 1 equivalent of trichlorovinylsilane was slowly added dropwise for 1 hour using the dropping funnel while flowing nitrogen gas. After completion of the dropwise addition, reactants were refluxed at 70°C to react overnight while flowing nitrogen gas, and, after cooling to room temperature, a pH was checked. In this case, if the pH was less than 7, it was neutralized with TEA (triethylamine), and a salt formed in this process was then filtered. Residual reactants and by-products were removed by reduced pressure at room temperature, and then vacuum distilled at 60°C to obtain the compound represented by Formula I-a below.

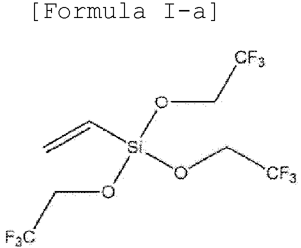

¹H-NMR data of the compound represented by Formula I-a are as follows.
¹H-NMR(400 MHz, CDCl₃) δ (ppm) : 6.34 (1H, dd), 6.18(1H, dd), 5.85(1H, dd), 4.12(6H, q)

### Synthesis Example 2. Preparation of the Compound Represented by Formula II-a

After adding 2.5 equivalents of 2,2,2-trifluoroethanol to a two-neck round-bottom flask, a dropping funnel and a reflux condenser were connected, the round-bottom flask was placed in an oil bath and then heated to 50°C, and 1 equivalent of dichlorovinylsilane was slowly added dropwise for 1 hour using the dropping funnel while flowing nitrogen gas. After completion of the dropwise addition, reactants were refluxed at 70°C to react overnight while flowing nitrogen gas, and, after cooling to room temperature, a pH was checked. In this case, if the pH was less than 7, it was neutralized with TEA (triethylamine), and a salt formed in this process was then filtered. Residual reactants and by-products were removed by reduced pressure at room temperature, and then vacuum distilled at 55°C to obtain the compound represented by Formula II-a below.

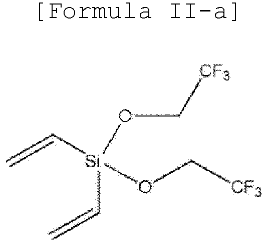

¹H-NMR data of the compound represented by Formula II-a are as follows.
¹H-NMR (400 MHz, CDCl₃) δ (ppm) : 6.32 (2H, dd), 6.14(2H, dd), 5.84 (2H, dd), 4.23(4H, q)

### Synthesis Example 3. Preparation of the Compound Represented by Formula III-b

1 equivalent of dichlorodimethylsilane was slowly added dropwise for 1 hour to a Schlenk round-bottom flask containing 2.2 equivalents of allylmagnesium bromide (1 M in ether) in a nitrogen atmosphere and an ice bath. The dropwise addition was completed, and a reaction was performed overnight at room temperature. The reaction was terminated by adding 5 equivalents of a saturated NH₄Cl aqueous solution dropwise into the corresponding flask. After an organic layer, which was obtained after the aqueous solution was removed by separation, was dried with CaCl₂, precipitates were removed by filtration. Residual reactants and by-products were removed by reduced pressure at room temperature, and then vacuum distilled at 80°C to obtain the compound represented by Formula III-b below.

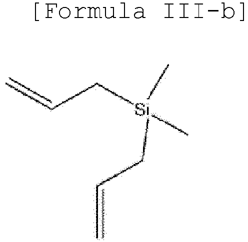

¹H-NMR data of the compound represented by Formula III-b are as follows.
¹H-NMR (400 MHz, CDCl₃) δ (ppm) : 5.77 (2H, m), 4.85 (4H, m), 1.53(4H, d), 0.00(6H, s)

### Examples and Comparative Examples

### Example 1-1

### (Non-aqueous Electrolyte Solution Preparation)

A non-aqueous electrolyte solution was prepared by adding 1 g of the compound represented by Formula I-a to 99 g of an organic solvent (ethylene carbonate (EC):ethyl methyl carbonate (EMC) = 1:2 volume ratio) in which 1.0 M LiPF₆ was dissolved.

### (Preparation of Lithium Metal Symmetric Cell)

A 200 µm thick lithium metal foil was used as a negative electrode and a positive electrode. After disposing a porous polypropylene separator between the negative electrode and the positive electrode in a glove box with an argon atmosphere to prepare an electrode assembly, the electrode assembly was put into a battery case, the above non-aqueous electrolyte solution was injected, and the battery case was sealed to prepare a coin cell-type lithium metal symmetric cell.

### Example 1-2

A non-aqueous electrolyte solution was prepared by adding 0.5 g of the compound represented by Formula I-a and 0.5 g of the compound represented by Formula II-a to 99 g of an organic solution (ethylene carbonate (EC):ethyl methyl carbonate (EMC) = 1:2 volume ratio) in which 1.0 M LiPF₆ was dissolved. A lithium metal symmetric cell was prepared in the same manner as in Example 1-1 except that the non-aqueous electrolyte solution prepared as described above was used.

### Example 1-3

A non-aqueous electrolyte solution was prepared by adding 0.5 g of the compound represented by Formula I-a and 0.5 g of the compound represented by Formula III-b to 99 g of an organic solution (ethylene carbonate (EC):ethyl methyl carbonate (EMC) = 1:2 volume ratio) in which 1.0 M LiPF₆ was dissolved. A lithium metal symmetric cell was prepared in the same manner as in Example 1-1 except that the non-aqueous electrolyte solution prepared as described above was used.

### Example 1-4

A non-aqueous electrolyte solution was prepared by adding 0.5 g of the compound represented by Formula I-a and 0.5 g of the compound represented by Formula IV-a (Sigma-Aldrich) to 99 g of an organic solution (ethylene carbonate (EC):ethyl methyl carbonate (EMC) = 1:2 volume ratio) in which 1.0 M LiPF₆ was dissolved. A lithium metal symmetric cell was prepared in the same manner as in Example 1-1 except that the non-aqueous electrolyte solution prepared as described above was used.

### Example 1-5

A non-aqueous electrolyte solution was prepared by adding 0.5 g of the compound represented by Formula I-a and 0.5 g of the compound represented by Formula V-b (2,4,6,8-tetramethyl-2,4,6,8-tetravinylcyclotetrasiloxane (Tokyo Chemical Industry, Co., Ltd.)) to 99 g of an organic solution (ethylene carbonate (EC):ethyl methyl carbonate (EMC) = 1:2 volume ratio) in which 1.0 M LiPF₆ was dissolved. A lithium metal symmetric cell was prepared in the same manner as in Example 1-1 except that the non-aqueous electrolyte solution prepared as described above was used.

### Comparative Example 1-1

A lithium metal symmetric cell was prepared in the same manner as in Example 1-1 except that an organic solvent (ethylene carbonate (EC):ethyl methyl carbonate (EMC) = 3:7 volume ratio), in which 1.0 M LiPF₆ was dissolved, was used as a non-aqueous electrolyte solution instead of the non-aqueous electrolyte solution of Example 1-1.

### Comparative Example 1-2

A non-aqueous electrolyte solution was prepared by adding 1 g of 1,3-propane sultone (Sigma-Aldrich) to 99 g of an organic solution (ethylene carbonate (EC):ethyl methyl carbonate (EMC) = 1:2 volume ratio) in which 1.0 M LiPF₆ was dissolved. A lithium metal symmetric cell was prepared in the same manner as in Example 1-1 except that the non-aqueous electrolyte solution prepared as described above was used.

### Comparative Example 1-3

A non-aqueous electrolyte solution was prepared by adding 1 g of TEOS (tetraethoxysilane) (Sigma-Aldrich) to 99 g of an organic solution (ethylene carbonate (EC):ethyl methyl carbonate (EMC) = 1:2 volume ratio) in which 1.0 M LiPF₆ was dissolved. A lithium metal symmetric cell was prepared in the same manner as in Example 1-1 except that the non-aqueous electrolyte solution prepared as described above was used.

**[Table 1]**

| | Lithium salt and other electrolyt e additives | Organic solvent | | Additives | |
|---|---|---|---|---|---|
| | | Configu ration | Addition amount (g) | Type | Additio n amount (g) |
| Example 1-1 | 1.0M LiPF₆ | EC:EMC = 1:2 volume ratio | 99 | Formula I-a | 1 |
| Example 1-2 | | | 99 | Formula I-a | 0.5 |
| | | | | Formula II-a | 0.5 |
| Example 1-3 | | | 99 | Formula I-a | 0.5 |
| | | | | Formula III-b | 0.5 |
| Example 1-4 | | | 99 | Formula I-a | 0.5 |
| | | | | Formula IV-a | 0.5 |
| Example 1-5 | | | 99 | Formula I-a | 0.5 |
| | | | | Formula V-b | 0.5 |
| Comparative Example 1-1 | | | 100 | - | - |
| Comparative Example 1-2 | | | 99 | 1, 3-propane sultone | 1 |
| Comparative Example 1-3 | | | 99 | TEOS | 1 |

### Example 2-1

### (Non-aqueous Electrolyte Solution Preparation)

A non-aqueous electrolyte solution was prepared by adding 1 g of the compound represented by Formula I-a to 99 g of an organic solvent (ethylene carbonate (EC):ethyl methyl carbonate (EMC) = 1:2 volume ratio) in which 1.0 M LiPF₆ was dissolved.

### (Lithium Metal Battery Preparation)

A positive electrode active material (LiNi_{0.8}Co_{0.1}Mn_{0.1}O₂):a conductive agent (carbon black) :a binder (polyvinylidene fluoride) were added in a weight ratio of 90:5:5 to N-methyl-2-pyrrolidone (NMP) to prepare a positive electrode active material slurry. Both surfaces of a 15 µm thick positive electrode collector (Al thin film) were coated with the positive electrode active material slurry to a thickness of 59 µm, dried, and rolled using a roll press to prepare a positive electrode (width: 12 mm, length: 12 mm, thickness: 74 µm).

A 200 µm thick lithium metal foil was used as a negative electrode. After disposing a porous polypropylene separator between the negative electrode and the positive electrode in a glove box with an argon atmosphere to prepare an electrode assembly, the electrode assembly was put into a battery case, the above non-aqueous electrolyte solution was injected, and the battery case was sealed to prepare a coin cell-type lithium metal battery.

### Example 2-2

A non-aqueous electrolyte solution was prepared by adding 0.5 g of the compound represented by Formula I-a and 0.5 g of the compound represented by Formula II-a to 99 g of an organic solution (ethylene carbonate (EC):ethyl methyl carbonate (EMC) = 1:2 volume ratio) in which 1.0 M LiPF₆ was dissolved. A lithium metal battery was prepared in the same manner as in Example 2-1 except that the non-aqueous electrolyte solution prepared as described above was used.

### Example 2-3

A non-aqueous electrolyte solution was prepared by adding 0.5 g of the compound represented by Formula I-a and 0.5 g of the compound represented by Formula III-b to 99 g of an organic solution (ethylene carbonate (EC):ethyl methyl carbonate (EMC) = 1:2 volume ratio) in which 1.0 M LiPF₆ was dissolved. A lithium metal battery was prepared in the same manner as in Example 2-1 except that the non-aqueous electrolyte solution prepared as described above was used.

### Example 2-4

A non-aqueous electrolyte solution was prepared by adding 0.5 g of the compound represented by Formula I-a and 0.5 g of the compound represented by Formula IV-a to 99 g of an organic solution (ethylene carbonate (EC):ethyl methyl carbonate (EMC) = 1:2 volume ratio) in which 1.0 M LiPF₆ was dissolved. A lithium metal battery was prepared in the same manner as in Example 2-1 except that the non-aqueous electrolyte solution prepared as described above was used.

### Example 2-5

A non-aqueous electrolyte solution was prepared by adding 0.5 g of the compound represented by Formula I-a and 0.5 g of the compound represented by Formula V-b (2,4,6,8-tetramethyl-2,4,6,8-tetravinylcyclotetrasiloxane (Tokyo Chemical Industry, Co., Ltd.)) to 99 g of an organic solution (ethylene carbonate (EC):ethyl methyl carbonate (EMC) = 1:2 volume ratio) in which 1.0 M LiPF₆ was dissolved. A lithium metal battery was prepared in the same manner as in Example 2-1 except that the non-aqueous electrolyte solution prepared as described above was used.

### Comparative Example 2-1

A lithium metal battery was prepared in the same manner as in Example 2-1 except that an organic solvent (ethylene carbonate (EC) :ethyl methyl carbonate (EMC) = 3:7 volume ratio), in which 1.0 M LiPF₆ was dissolved, was used as a non-aqueous electrolyte solution instead of the non-aqueous electrolyte solution of Example 2-1.

### Comparative Example 2-2

A non-aqueous electrolyte solution was prepared by adding 1 g of 1,3-propane sultone (Sigma-Aldrich) to 99 g of an organic solution (ethylene carbonate (EC):ethyl methyl carbonate (EMC) = 1:2 volume ratio) in which 1.0 M LiPF₆ was dissolved. A lithium metal battery was prepared in the same manner as in Example 2-1 except that the non-aqueous electrolyte solution prepared as described above was used.

### Comparative Example 2-3

A non-aqueous electrolyte solution was prepared by adding 1 g of TEOS (tetraethoxysilane) (Sigma-Aldrich) to 99 g of an organic solution (ethylene carbonate (EC) :ethyl methyl carbonate (EMC) = 1:2 volume ratio) in which 1.0 M LiPF₆ was dissolved. A lithium metal battery was prepared in the same manner as in Example 2-1 except that the non-aqueous electrolyte solution prepared as described above was used.

**[Table 2]**

| | Lithium salt and other electrolyt e additives | Organic solvent | | Additives | |
|---|---|---|---|---|---|
| | | Configu ration | Addition amount (g) | Type | Additio n amount (g) |
| Example 2-1 | 1.0M LiPF₆ | EC:EMC = 1:2 volume ratio | 99 | Formula I-a | 1 |
| Example 2-2 | | | 99 | Formula I-a | 0.5 |
| | | | | Formula II-a | 0.5 |
| Example 2-3 | | | 99 | Formula I-a | 0.5 |
| | | | | Formula III-b | 0.5 |
| Example 2-4 | | | 99 | Formula I-a | 0.5 |
| | | | | Formula IV-a | 0.5 |
| Example 2-5 | | | 99 | Formula I-a | 0.5 |
| | | | | Formula V-b | 0.5 |
| Comparative Example 2-1 | | | 100 | - | - |
| Comparative Example 2-2 | | | 99 | 1, 3-propane sultone | 1 |
| Comparative Example 2-3 | | | 99 | TEOS | 1 |

### Experimental Examples

### Experimental Example 1: Lithium Metal Symmetric Cell Characteristics Evaluation

An activation process was performed in which that the lithium metal symmetric cells prepared in Examples 1-1 to 1-5 and Comparative Examples 1-1 to 1-3 were cut-off charged at a current density of 0.2 mA/cm² for 1 hour at 25°C with a charger/discharger and discharged for 1 hour was set as 1 cycle and an initial discharge process was performed for 3 cycles. Subsequently, an initial charge/discharge process, in which cut-off charging of each cell at a current density of 1.0 mA/cm² for 1 hour with a charger/discharger and discharging of each cell for 1 hour was set as 1 cycle, was performed for 500 cycles. In this case, an overvoltage (overvoltage during activation), which occurred in the first cycle when the current density was 0.2 mA/cm², and overvoltages, which occurred in the first cycle, 100^{th} cycle, 200^{th} cycle, and 300^{th} cycle when the current density was 1.0 mA/cm², are presented in Table 3 below.

**[Table 3]**

| Category | Overvolta ge occurring in the first cycle when the current density was 0.2 mA/ cm² (mV) | Overvolta ge occurring in the first cycle when the current density was 1.0 mA/ cm² (mV) | Overvolta ge occurring in the 100^{th} cycle when the current density was 1.0 mA/ cm² (mV) | Overvolta ge occurring in the 200^{th} cycle when the current density was 1.0 mA/ cm² (mV) | Overvolta ge occurring in the 300^{th} cycle when the current density was 1.0 mA/ cm² (mV) |
|---|---|---|---|---|---|
| Example 1-1 | 38.8 | 165.2 | 16.6 | 12.7 | 8.8 |
| Example 1-2 | 43.3 | 172.2 | 15.3 | 11.5 | 6.1 |
| Example 1-3 | 45.6 | 164.5 | 19.4 | 16.9 | 13.5 |
| Example 1-4 | 51.7 | 149.7 | 28.2 | 26.7 | 24.7 |
| Example 1-5 | 55.9 | 144.8 | 31.9 | 29.6 | 25.8 |
| Comparative Example 1-1 | 132.8 | 133.2 | 53.2 | 253.0 | - |
| Comparative Example 1-2 | 144.0 | 147.1 | 71.7 | 238.3 | - |
| Comparative Example 1-3 | 128.2 | 136.2 | 61.6 | 178.7 | 289.9 |

As illustrated in Table 3, with respect to Examples 1-1 to 1-5, the voltage was maintained low in comparison to Comparative Examples 1-1 to 1-3, and life characteristics were improved.

With respect to Examples 1-1 to 1-5, an SEI layer with high structural flexibility and stability was formed on the lithium metal foil, and thus, since plating/exfoliation occurred uniformly, it may be considered that lifetime and stability of the lithium metal battery were improved. In contrast, with respect to Comparative Examples 1-1 to 1-3, it may be confirmed that plating/exfoliation occurred non-uniformly on the lithium metal foil.

### Experimental Example 2: Cycle Characteristics Evaluation

Two cycles were performed under conditions of 0.05 C cut-off charging the lithium metal batteries of Examples 2-1 to 2-5 and Comparative Examples 2-1 to 2-3 at 0.1 C rate to 4.3 V under a constant current/constant voltage condition at 25°C with a charger/discharger and discharging the lithium metal batteries to 3.0 V. Thereafter, 100 cycles were performed under conditions of 0.05 C cut-off charging the lithium metal batteries at 1.0 C rate to 4.3 V under a constant current/constant voltage condition with a charger/discharger and discharging the lithium metal batteries to 3.0 V. In this case, capacity after 1 cycle and discharge capacity after 100 cycles were measured, and discharge capacity retention (discharge capacity after 100 cycles/discharge capacity after 1 cycle × 100) was calculated and presented in Table 4 below.

**[Table 4]**

| | Discharge capacity retention (@ 1.0 C, %) |
|---|---|
| Example 2-1 | 89.2 |
| Example 2-2 | 92.6 |
| Example 2-3 | 90.0 |
| Example 2-4 | 87.1 |
| Example 2-5 | 86.4 |
| Comparative Example 2-1 | 58.8 |
| Comparative Example 2-2 | 59.9 |
| Comparative Example 2-3 | 64.3 |

As illustrated in Table 4, with respect to Examples 2-1 to 2-5, discharge capacity retentions at the 100^{th} cycle were improved in comparison to those of Comparative Examples 2-1 to 2-3.

This characteristic was because the silane-based additive contained in the non-aqueous electrolyte solutions of Examples 2-1 to 2-5 efficiently formed a highly stable and robust SEI layer. Specifically, the reason for this was that, since the silane-based additive represented by Formula I formed a covalent bond ([Li]-O-Si-O-) with the electrode, an SEI layer, which was not significantly affected by volume changes, that is, with excellent mechanical stiffness was formed. As a result, since a Li-Si-O network was formed between the negative electrode and the additive and an -O-Si-O-Si-O- network was formed between the SEI layer and the additive, it may be considered that the stability problem due to the formation of the lithium dendrites during charge and discharge was solved.

Also, the reason for this was that, since the silane-based additive represented by Formula I contained a fluorine element, it became a source of fluorine anions during a reduction/oxidation decomposition reaction, and thus, it helped to form an SEI layer based on LiF, a stable inorganic compound included in the SEI layer.

In addition, the reason for this was that, since the silane-based additive represented by Formula I contained an alkenyl group, it formed an SEI layer in the form of a polymer by forming a C-C bond through the reduction/oxidation decomposition reaction.

## Claims

1. A lithium metal battery comprising:
a positive electrode;
a lithium metal negative electrode;
a separator disposed between the positive electrode and the lithium metal negative electrode; and
a non-aqueous electrolyte solution including an organic solvent, a lithium salt, and a compound represented by Formula I: 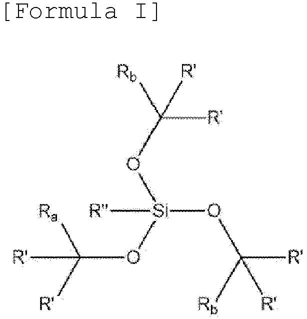 wherein, in Formula I,
Rₐ is a C₁-C₁₀ alkyl group substituted with at least one fluorine element,
R_{b} is each independently a C₁-C₁₀ alkyl group unsubstituted or substituted with at least one fluorine element,
R' is each independently hydrogen; an unsubstituted or substituted C₁-C₁₀ alkyl group; or an unsubstituted or substituted C₁-C₁₀ heteroalkyl group, and
R" is an unsubstituted or substituted C₂-C₁₀ alkenyl group; or an unsubstituted or substituted C₂-C₁₀ alkynyl group.

2. The lithium metal battery of claim 1, wherein the non-aqueous electrolyte solution further comprises at least one selected from compounds represented by Formula II to Formula V: 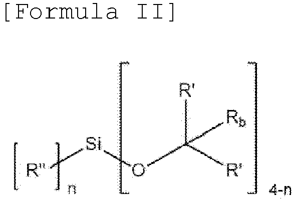 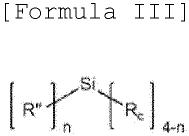
[Formula IV] Si(R")₄ 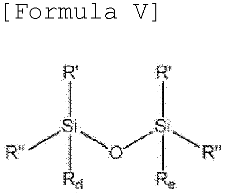
wherein, in Formula II to Formula V,
R_{b} is each independently a C₁-C₁₀ alkyl group unsubstituted or substituted with at least one fluorine element,
R_{c} is each independently an unsubstituted or substituted C₁-C₁₀ alkyl group,
R' is each independently hydrogen; an unsubstituted or substituted C₁-C₁₀ alkyl group; or an unsubstituted or substituted C₁-C₁₀ heteroalkyl group,
R" is an unsubstituted or substituted C₂-C₁₀ alkenyl group; or an unsubstituted or substituted C₂-C₁₀ alkynyl group,
R_{d} and Rₑ are each independently hydrogen; an unsubstituted or substituted C₁-C₁₀ alkyl group; an unsubstituted or substituted C₁-C₁₀ heteroalkyl group; or an unsubstituted or substituted siloxane group,
wherein, in a case in which both R_{d} and Rₑ are siloxane groups, R_{d} and Rₑ are connected to each other to form a ring composed of a siloxane bond, and
n is 2 or 3.

3. The lithium metal battery of claim 2, wherein the compound represented by Formula I is at least one compound selected from compounds of Formulae I-a to I-f:

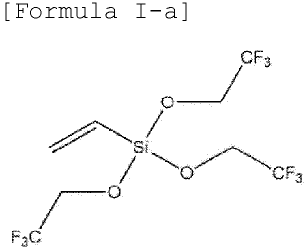

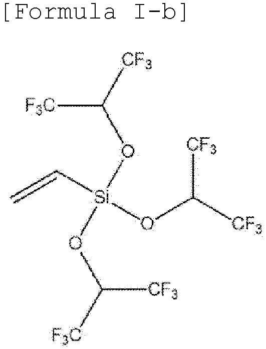

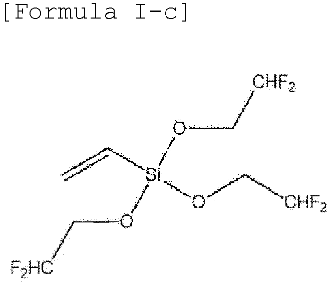

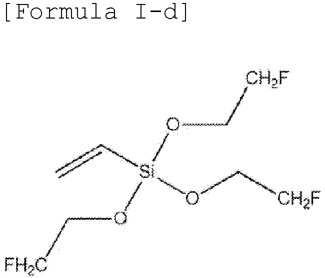

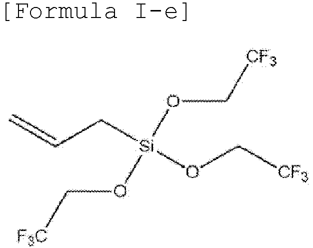

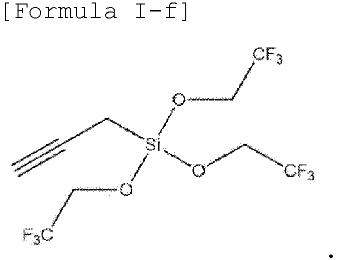

4. The lithium metal battery of claim 2, wherein the compound represented by Formula II is at least one compound selected from compounds of Formulae II-a to II-f:

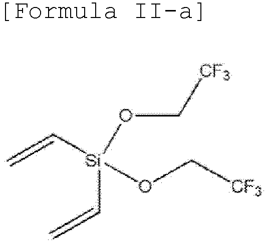

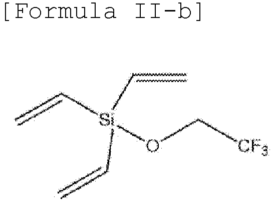

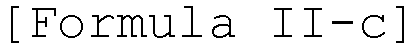

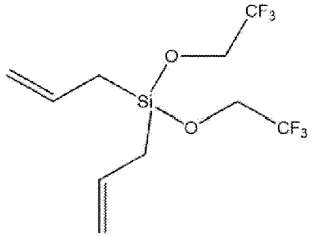

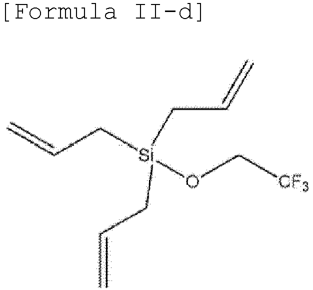

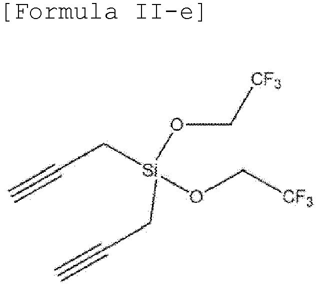

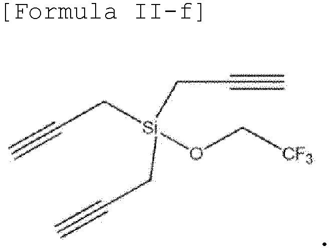

5. The lithium metal battery of claim 2, wherein the compound represented by Formula III is at least one compound selected from compounds of Formulae III-a to III-o:

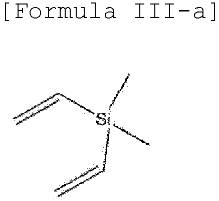

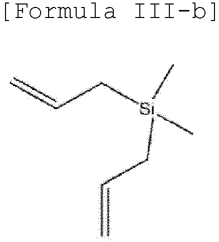

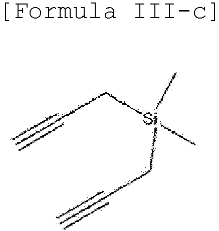

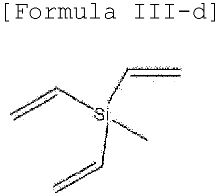

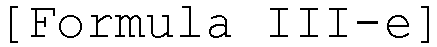

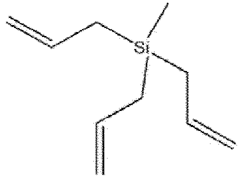

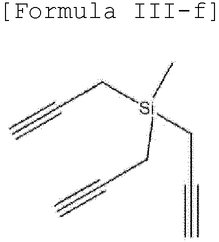

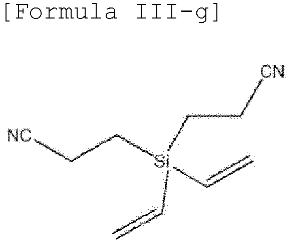

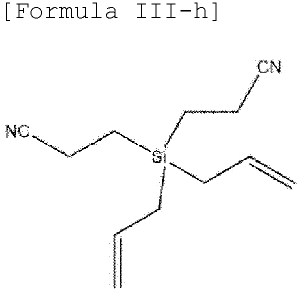

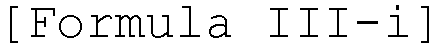

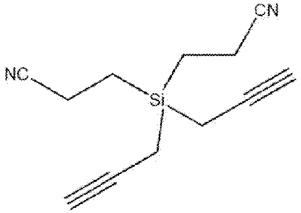

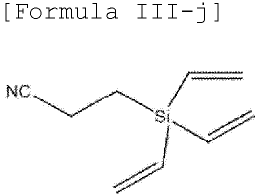

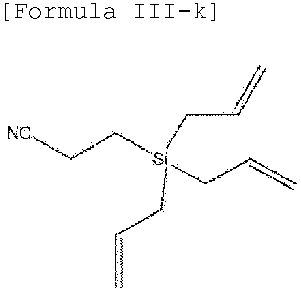

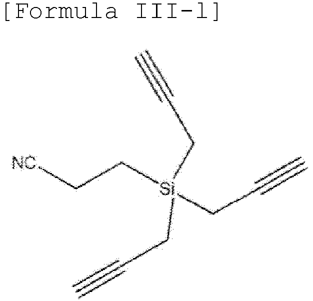

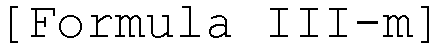

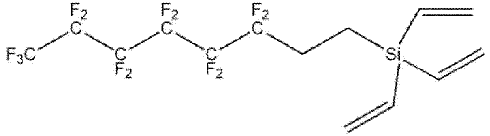

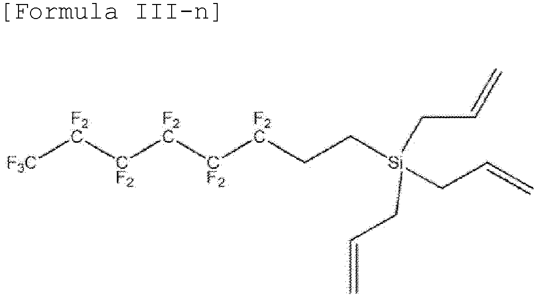

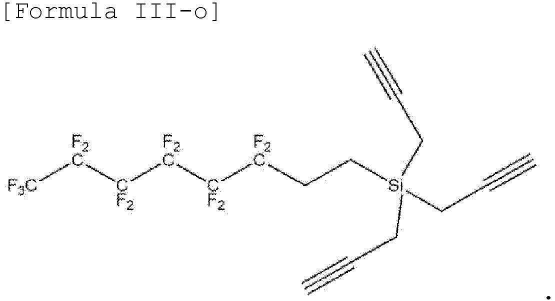

6. The lithium metal battery of claim 2, wherein the compound represented by Formula IV is at least one compound selected from compounds of Formulae IV-a to IV-c:

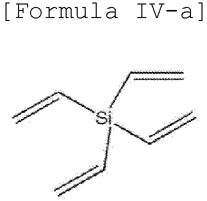

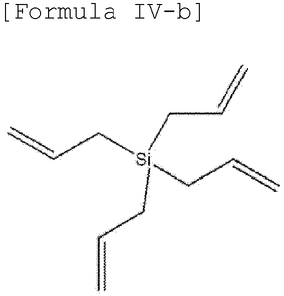

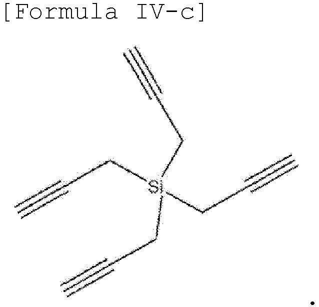

7. The lithium metal battery of claim 2, wherein the compound represented by Formula V is at least one compound selected from compounds of Formulae V-a and V-b:
